# EUROPEAN PATENT APPLICATION

(11) **EP 4 572 343 A1**
(43) Date of publication of application: **18.06.2025**
(21) Application number: 23851527.4
(22) Date of filing: 11.07.2023
(51) Int. Cl.: H04W 4/02

(54) **POSITION ACQUISITION METHOD AND APPARATUS, AND STORAGE MEDIUM**

(30) Priority: 11.08.2022 CN 202210967133
(71) Applicant: Datang Mobile Communications Equipment Co., Ltd., Beijing 100085 (CN)
(72) Inventor: ZHANG, Xiangdong, Beijing 100085 (CN); JIA, Yinan, Beijing 100085 (CN)
(74) Representative: Cabinet Nony
(86) International application number: PCT/CN2023/106769
(87) International publication number: WO 2024/032302

(57) **Abstract**

Provided in the embodiments of the present disclosure are a position acquisition method and apparatus, and a storage medium. The method comprises: a terminal acquiring first time information; and the terminal acquiring terminal position information according to the first time information.

## Description

### CROSS-REFERENCES TO RELATED APPLICATIONS

The present application claims priority to Chinese patent application No. 202210967133.0 filed on August 11, 2022, entitled "Position Acquisition Method and Apparatus, and Storage Medium", which is hereby incorporated by reference in its entirety.

### FIELD

The present application relates to the field of communication, and in particular to methods and apparatuses for global navigation satellite system (GNSS) position acquisition and a storage medium.

### BACKGROUND

A goal of an Internet of Things (IoT) non-terrestrial networks (NTN) technology is to enable an IoT device to access a satellite network.

The related art only involves shorter connections. In such a scenario, after a GNSS position validity timer expires, a terminal/user equipment (UE) may enter a non-connected state. The UE does not need to re-acquire a GNSS position information in a connected state.

However, in the future, it is necessary to support long connections for a wider range of scenarios, that is, the UE will be in a connected state for a long time. Due to a limited validity period of the GNSS position, it is impossible to ensure that the UE is in a connected state for a long time. When the GNSS position validity timer expires, the UE enters a non-connected state and then reconnects to continue data transmission, resulting in a problem of low data transmission efficiency.

### BRIEF SUMMARY

Embodiments of the present application provide methods and apparatuses for position acquisition and a storage medium, which solves a problem of low data transmission efficiency in a related art.

An embodiment of the present application provides a method for position acquisition, including:
acquiring, by a terminal, first time information; and
acquiring, by the terminal, position information of the terminal based on the first time information.

In some embodiments, the method further includes:
receiving, by the terminal, a first message, where the first message carries the first time information.

In some embodiments, the method further includes:
transmitting, by the terminal, a second message to a network device, where the second message includes assistance information, and the assistance information is used to assist the network device in determining the first time information.

In some embodiments, the assistance information includes one or more pieces of the following information:
usage indication information of a first message;
a first duration; or
a first period.

In some embodiments, the first time information is predefined time information.

In some embodiments, the first time information is a first period of time;
acquiring, by the terminal, the position information of the terminal based on the first time information includes:
acquiring, by the terminal, a position of the terminal within the first period of time.

In some embodiments, the first time information includes one or more of the following:
a time point at which a position of the terminal becomes outdated; or
a time point at which a terminal position validity timer expires.

In some embodiments, the method further includes:
requesting, by the terminal, to maintain a connected state.

In some embodiments, the method further includes:
requesting, by the terminal, a dedicated random access resource.

In some embodiments, the method further includes:
receiving, by the terminal, a third message, where the third message includes the dedicated random access resource.

In some embodiments, the method further includes:
initiating, by the terminal, random access using the dedicated random access resource.

In some embodiments, acquiring, by the terminal, a dedicated random access resource configured by a network device includes:
acquiring, by the terminal, a start time and/or an available duration of an available period of time for the dedicated random access resource, or
acquiring, by the terminal, a start time and/or an end time of an available period of time for the dedicated random access resource.

In some embodiments, the method further includes:
receiving, by the terminal, a fourth message, where the fourth message includes a start time and/or an available duration of an available period of time for the dedicated random access resource, or a start time and/or an end time of an available period of time for the dedicated random access resource.

An embodiment of the present application provides a method for position acquisition, including:
acquiring, by a network device, first information, where the first information is used to acquire position information of a terminal by the terminal; and
transmitting, by the network device, a first message to the terminal, where the first message carries the first information.

In some embodiments, the first information is first time information, where the first time information is used to acquire the position information of the terminal by the terminal.

In some embodiments, the method further includes:
acquiring, by the network device, a second message transmitted from the terminal, where the second message includes assistance information.

In some embodiments, the method further includes:
determining, by the network device, first time information based on the assistance information.

In some embodiments, the assistance information includes one or more pieces of the following information:
usage indication information of a first message;
a first duration; or
a first period.

In some embodiments, the first time information is dedicated random access resource configuration information.

In some embodiments, the method further includes:
receiving, by the network device, a request message for maintaining connected state.

In some embodiments, the method further includes:
receiving, by the network device, a request message for dedicated random access resource.

In some embodiments, the method further includes:
transmitting, by the network device, a third message, where the third message includes a dedicated random access resource.

In some embodiments, the method further includes:
transmitting, by the network device, a fourth message, where the fourth message includes a start time and/or an available duration of an available period of time for a dedicated random access resource, or a start time and/or an end time of an available period of time for a dedicated random access resource.

In some embodiments, the method further includes:
receiving, by the network device, a random access request message using the dedicated random access resource.

An embodiment of the present application provides a terminal, including a memory, a transceiver, and a processor;
the memory is used to store a computer program; the transceiver is used to receive and transmit data under control of the processor; the processor is used to read the computer program in the memory and perform the following operations:
acquiring first time information; and
acquiring position information of the terminal based on the first time information.

In some embodiments, the processor is used to read the computer program in the memory and perform the following operation:
receiving a first message, where the first message carries the first time information.

In some embodiments, the processor is further used to read the computer program in the memory and perform the following operation:
transmitting a second message to a network device, where the second message includes assistance information, and the assistance information is used to assist the network device in determining the first time information.

In some embodiments, the assistance information includes one or more pieces of the following information:
usage indication information of a first message;
a first duration; or
a first period.

In some embodiments, the first time information is predefined time information.

In some embodiments, the first time information is a first period of time;
acquiring the position information of the terminal based on the first time information includes:
acquiring the position of the terminal within the first period of time.

In some embodiments, the first time information includes one or more of the following:
a time point at which a position of the terminal becomes outdated; or
a time point at which a terminal position validity timer expires.

In some embodiments, the processor is further used to read the computer program in the memory and perform the following operation:
requesting to maintain a connected state.

In some embodiments, the processor is further used to read the computer program in the memory and perform the following operation:
requesting a dedicated random access resource.

In some embodiments, the processor is further used to read the computer program in the memory and perform the following operation:
receiving a third message, where the third message includes the dedicated random access resource.

In some embodiments, the processor is further used to read the computer program in the memory and perform the following operation:
initiating random access using the dedicated random access resource.

In some embodiments, acquiring a dedicated random access resource configured by a network device includes:
acquiring a start time and/or an available duration of an available period of time for the dedicated random access resource, or
acquiring a start time and/or an end time of an available period of time for the dedicated random access resource.

In some embodiments, the processor is further used to read the computer program in the memory and perform the following operation:
receiving a fourth message, where the fourth message includes a start time and/or an available duration of an available period of time for the dedicated random access resource, or a start time and/or an end time of an available period of time for the dedicated random access resource.

An embodiment of the present application provides a network device, including a memory, a transceiver and a processor;
the memory is used to store a computer program; the transceiver is used to receive and transmit data under control of the processor; the processor is used to read the computer program in the memory and perform the following operations:
acquiring first information, where the first information is used to acquire position information of a terminal by the terminal; and
transmitting a first message to a terminal, where the first message carries the first information.

In some embodiments, the first information is first time information, where the first time information is used to acquire the position information of the terminal by the terminal.

In some embodiments, the processor is further used to read the computer program in the memory and perform the following operation:
acquiring a second message transmitted from the terminal, where the second message includes assistance information.

In some embodiments, the processor is further used to read the computer program in the memory and perform the following operation:
determining first time information based on the assistance information.

In some embodiments, the assistance information includes one or more pieces of the following information:
usage indication information of a first message;
a first duration; or
a first period.

In some embodiments, the first time information is dedicated random access resource configuration information.

In some embodiments, the processor is further used to read the computer program in the memory and perform the following operation:
receiving a request message for maintaining connected state.

In some embodiments, the processor is further used to read the computer program in the memory and perform the following operation:
receiving a request message for dedicated random access resource.

In some embodiments, the processor is further used to read the computer program in the memory and perform the following operation:
transmitting a third message, where the third message includes a dedicated random access resource.

In some embodiments, the processor is further used to read the computer program in the memory and perform the following operation:
transmitting a fourth message, where the fourth message includes a start time and/or an available duration of an available period of time for a dedicated random access resource, or a start time and/or an end time of an available period of time for a dedicated random access resource.

In some embodiments, the processor is further used to read the computer program in the memory and perform the following operation:
receiving a random access request message using the dedicated random access resource.

An embodiment of the present application provides an apparatus for position acquisition, including:
a first acquiring module, used to acquire first time information; and
a first acquiring module, used to acquire position information of the terminal based on the first time information.

In some embodiments, the apparatus further includes a first receiving module;
where the first receiving module is used to receive a first message, where the first message carries the first time information.

In some embodiments, the apparatus further includes a second transmitting module;
where the second transmitting module is used to transmit a second message to a network device, the second message includes assistance information, and the assistance information is used to assist the network device in determining the first time information.

In some embodiments, the assistance information includes one or more pieces of the following information:
usage indication information of a first message;
a first duration; or
a first period.

In some embodiments, the first time information is predefined time information.

In some embodiments, the first time information is a first period of time;
acquiring the position information of the terminal based on the first time information includes:
acquiring the position of the terminal within the first period of time.

In some embodiments, the first time information includes one or more of the following:
a time point at which a position of the terminal becomes outdated; or
a time point at which a terminal position validity timer expires.

In some embodiments, the apparatus further includes a first requesting module;
where the first requesting module is used to request to maintain a connected state.

In some embodiments, the apparatus further includes a second requesting module;
where the second requesting module is used to request a dedicated random access resource.

In some embodiments, the apparatus further includes a second receiving module;
where the second receiving module is used to receive a third message, and the third message includes the dedicated random access resource.

In some embodiments, the apparatus further includes a first initiating module;
where the first initiating module is used to initiate random access using the dedicated random access resource.

In some embodiments, acquiring a dedicated random access resource configured by a network device includes:
acquiring a start time and/or an available duration of an available period of time for the dedicated random access resource, or
acquiring a start time and/or an end time of an available period of time for the dedicated random access resource.

In some embodiments, the apparatus further includes a third receiving module;
where the third receiving module is used to receive a fourth message, and the fourth message includes a start time and/or an available duration of an available period of time for the dedicated random access resource, or a start time and/or an end time of an available period of time for the dedicated random access resource.

An embodiment of the present application provides an apparatus for position acquisition, including:
a third acquiring module, used to acquire first information, where the first information is used to acquire position information of a terminal by the terminal; and
a first transmitting module, used to transmit a first message to a terminal, where the first message carries the first information.

In some embodiments, the first information is first time information, where the first time information is used to acquire the position information of the terminal by the terminal.

In some embodiments, the apparatus further includes a fourth acquiring module;
where the fourth acquiring module is used to acquire a second message transmitted from the terminal, and the second message includes assistance information.

In some embodiments, the apparatus further includes a first determining module;
where the first determining module is used to determine first time information based on the assistance information.

In some embodiments, the assistance information includes one or more pieces of the following information:
usage indication information of a first message;
a first duration; or
a first period.

In some embodiments, the first time information is dedicated random access resource configuration information.

In some embodiments, the apparatus further includes a fourth receiving module;
where the fourth receiving module is used to receive a request message for maintaining connected state.

In some embodiments, the apparatus further includes a fifth receiving module;
where the fifth receiving module is used to receive a request message for dedicated random access resource.

In some embodiments, the apparatus further includes a third transmitting module;
where the third transmitting module is used to transmit a third message, and the third message includes a dedicated random access resource.

In some embodiments, the apparatus further includes a fourth transmitting module;
where the fourth transmitting module is used to transmit a fourth message, and the fourth message includes a start time and/or an available duration of an available period of time for a dedicated random access resource, or a start time and/or an end time of an available period of time for a dedicated random access resource.

In some embodiments, the apparatus further includes a sixth receiving module;
where the sixth receiving module is used to receive a random access request message using the dedicated random access resource.

An embodiment of the present application further provides a processor-readable storage medium storing a computer program, where the computer program causes a processor to perform the methods for position acquisition described above.

An embodiment of the present application further provides a computer-readable storage medium storing a computer program, where the computer program causes a computer to perform the methods for position acquisition described above.

An embodiment of the present application further provides a communication device-readable storage medium storing a computer program, where the computer program causes a communication device to perform the methods for position acquisition described above.

An embodiment of the present application further provides a chip product-readable storage medium storing a computer program, where the computer program causes a chip product to perform the methods for position acquisition described above.

In the methods and apparatuses for position acquisition and the storage medium provided by embodiments of the present application, the terminal acquires first time information and acquires the position information of the terminal based on the first time information, which may ensure that the terminal is in a connected state for a relatively long period of time. The terminal is avoided to enter a non-connected state in case that the GNSS position validity timer expires, and then reconnect to continue data transmission, which improves data transmission efficiency.

### BRIEF DESCRIPTION OF THE DRAWINGS

To illustrate solutions in the embodiments of the present application or the related art more clearly, the drawings used in the descriptions of the embodiments or the prior art will be briefly described below. The drawings in the following description are some embodiments of the present application, and other drawings may be obtained based on these drawings without any creative work for those skilled in the related art.
FIG. 1 is a schematic diagram of a transparent payload mode in satellite communication;
FIG. 2 is a schematic diagram of a measurement procedure in a long-term evolution (LTE);
FIG. 3 is a first schematic flowchart of a method for position acquisition according to an embodiment of the present application;
FIG. 4 is a second schematic flowchart of a method for position acquisition according to an embodiment of the present application;
FIG. 5 is a schematic structural diagram of a terminal according to an embodiment of the present application;
FIG. 6 is a schematic structural diagram of a network device according to an embodiment of the present application;
FIG. 7 is a first schematic structural diagram of an apparatus for position acquisition according to an embodiment of the present application; and
FIG. 8 is a second schematic structural diagram of an apparatus for position acquisition according to an embodiment of the present application.

### DETAILED DESCRIPTION

Satellite communication operates in two following modes.

One is a transparent payload mode, in which the satellite only transparently forwards the signal without any processing, and a terminal communicates with a satellite gateway, that is, a satellite only performs frequency conversion and wireless signal amplification and other operations on the uplink/downlink signal, and has a similar function to that of a radio frequency relay.

The other is a renewable communication mode, in which the satellite may detect information of a received signal, process and forward the information of the received signal, completes the function of the base station and connects the terminal and the gateway. That is, the satellite may perform frequency conversion, wireless signal amplification, encoding/modulation, demodulation/decoding and other functions on uplink/downlink signals. That is to say, the satellite may have all or part of the functions of a new generation node B (gNB) and may renew the signal.

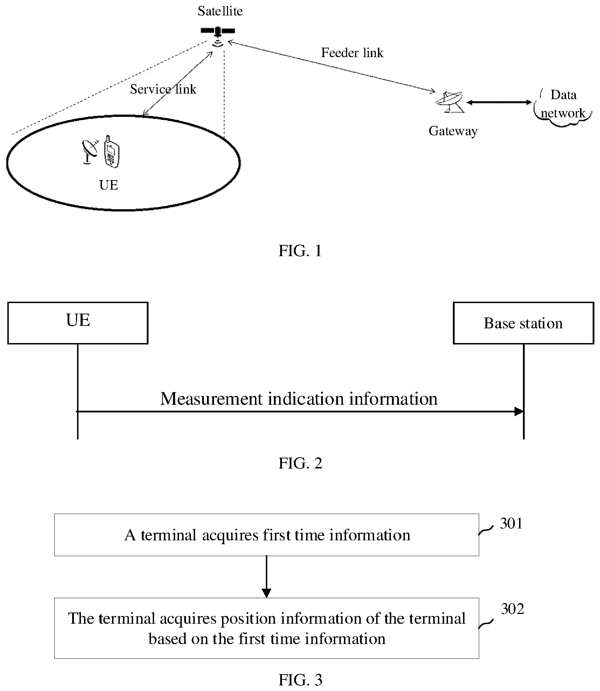

FIG. 1 is a schematic diagram of a transparent payload mode in satellite communication. As shown in FIG. 1, in satellite communication, a connection between a user equipment (UE) and a satellite is called a service link, and a connection between the satellite and a gateway is a feeder link.

A goal of Internet of Things (IoT) non-terrestrial networks (NTN) technology is to enable an IoT device, mainly a NB IoT device or an enhanced machine-Type communication (eMTC) device, to access the satellite network.

In the IoT NTN research project of Rel-17, main research is a scenario of shorter connection. In such a scenario, after a global navigation satellite system (GNSS) position validity timer expires, the UE may enter the non-connected state. Therefore, the UE does not need to re-acquire a GNSS position information in a connected state. However, in the IoT NTN research project of Rel-18, it is necessary to support long connections for a wider range of scenarios, that is, the IoT NTN device will be in a connected state for a long time. Then, at this time, in the connected state, UE's GNSS position validity timer may expire. However, the IoT NTN project of Rel-18 still maintains an assumption of the IoT NTN project of Rel-17: IoT NTN UE is unable to perform data communication and GNSS position acquisition simultaneously. Therefore, how a IoT NTN UE in a connected state re-acquires the GNSS position is a problem that needs to be studied.

The IoT NTN project of 3GPP RANI has discussed this issue and agrees with some conclusions. For example, a gap needs to be defined for re-acquiring a GNSS position, the UE may report GNSS assistance information (the specific content of the assistance information is to be studied), and whether the UE or the network device triggers GNSS measurement, etc..

FIG. 2 is a schematic diagram of a measurement procedure in a long-term evolution (LTE). As shown in FIG. 2, during the measurement procedure in the LTE, by instructing a network device, the UE will start or stop observed time difference of arrival (OTDOA) inter-frequency or intra-frequency reference signal time difference (RSTD) measurement which requires a gap. After receiving the signaling, the network device may configure a gap for the UE to perform the above measurement for the UE. Since some of the information used in the above measurement may be from other cells and the current serving cell is not known in advance, the UE needs to report it.

One of the research objectives of the IoT NTN project is to re-acquire the UE GNSS position. There is no solution of a gap for GNSS position re-acquisition in the related art. However, in the future, it is necessary to support long connections for a wider range of scenarios, that is, the UE will be in a connected state for a long time. Due to a limited validity period of the GNSS position, it is impossible to ensure that the UE is in a connected state for a long time. When the GNSS position validity timer expires, the UE enters a non-connected state and then reconnects to continue data transmission, resulting in a problem of low data transmission efficiency.

In view of the above problems, embodiments of the present application provide a method for position acquisition, which may ensure that the UE is in a connected state for a relatively long period of time and avoid a problem of low data transmission efficiency when the UE enters a non-connected state in case that the GNSS position validity timer expires, and then reconnects to continue data transmission.

In order to illustrate objectives, solutions and advantages of the present application more clearly, the solutions in the embodiments of the present application are clearly and completely described in the following in conjunction with the accompanying drawings in the present application. These embodiments are a part of the embodiments of the present application, and not all of the embodiments. All other embodiments obtained by the person skilled in the art based on the embodiments of the present application without creative work are within the scope of the present application.

FIG. 3 is a first schematic flowchart of a method for position acquisition according to an embodiment of the present application. As shown in FIG. 3, the method for position acquisition according to an embodiment of the present application may be performed by a terminal, such as a mobile phone, etc. The method includes the following steps.

Step 301: a terminal acquires first time information.

Step 302: the terminal acquires position information of the terminal based on the first time information.

Specifically, in the embodiments of the present application, the first time information may be configured by the network device, or may be predefined time information.

Specifically, a position of a terminal may be acquired at a start time indicated by the first time information; or, a position of a terminal may be acquired after a time indicated by the first time information; or, a position of a terminal may be acquired within the period of time/gap indicated by the first time information.

In some embodiments, acquiring the position of the terminal may include acquiring a GNSS position information of the terminal, or performing GNSS measurement, etc.

In some embodiments, the terminal transmits a second message to the network device. The second message includes assistance information, and the assistance information is used to assist the network device in determining the first time information.

Specifically, in some embodiments, the assistance information includes one or more pieces of the following information:
usage indication information of a first message;
a first duration; or
a first period.

Specifically, the embodiment of the present application reuses the OTDOA inter-frequency or intra-frequency RSTD measurement negotiation signaling and procedure in the traditional network to support negotiating a gap for acquiring or re-acquiring terminal's position.

The following embodiment is described only by taking re-acquiring the terminal's position as an example. The description is also suitable for the case of acquiring the terminal's position.

The following embodiment is described only by taking acquiring GNSS position of the terminal as an example. The description is also suitable for the case of acquiring other positions of the terminal, or for the case of the terminal performing GNSS measurement.

The positioning signaling and related procedures in the current LTE are reused, and the reserved state of the current signaling is used for new indication.

There are three reserved states (spare1 NULL, spare2 NULL and spare3 NULL) in the current measurement indication message (InterFreqRSTDMeasurementIndication) that are not used.

One or more of the above reserved states may be used to transmit new indication information. For example, optionally, one or more of the following three information needs to be indicated:

First information GNSSReq (usage indication information of a first message): is used to indicate that the UE transmits the signaling not for OTDOA inter-frequency or intra-frequency RSTD measurement, but for re-acquisition of a GNSS position information. The indication information may be explicitly indicated, that is, a separate field is used to indicate, that the current message is a gap for re-acquiring the GNSS position information requested by the UE. The indication information may also be implicitly indicated to a network device, that is, a separate field is not used to indicate, but implicitly indicated by the UE using the reserved field of the message. For example, the UE uses the reserved field of the current message to indicate the following second information and/or third information.

In addition, the first information may also be used to indicate that the terminal requests/expects to maintain a connected state, or not to leave the connected state.

Second information GNSSGap (first duration) is used to indicate the time required for the UE to expect GNSS re-acquisition. The network device configures a suitable gap for the UE on this basis.

Since different UEs need different times to acquire the GNSS position information, and even the same UE needs different times to acquire the GNSS position information at different moments, it is recommended that the UE feeds back the time required to acquire the GNSS position information when transmitting the message for reference by the network device.

In an embodiment, the UE may not feed back that the times required for the UE to acquire the GNSS position information are different, but specify or configure a common time required for acquiring the GNSS position information by the network device. The acquisition time may be relatively large, which may include a maximum value or an average value of the times required for different UEs to acquire the GNSS position information.

Third information GNSSPeriod (first period): is used to indicate a gap period.

All of traditional measurement gaps are periodic, and the gap period is a mandatory configuration. A GNSS measurement gap may not need periodicity, or the period is difficult to be determined since the time when the UE needs GNSS positioning next time is difficult to be determined. If it is not periodic, this gap is one-off, and the setup and release of the traditional measurement gap are not required, or the concepts of start and stop is not required.

In an embodiment, the UE may indicate a period, which may refer to a validity duration of the GNSS position after the UE acquires the GNSS position once. The validity duration may be associated with a moving speed of the UE. The faster the speed, the shorter the validity duration, and vice versa. In an embodiment, the gap period may be a specified gap period or a common value or an average value of a gap period configured by a network device. Then an own moving speed factor is fed back by the UE, and an actual gap period used by the UE is determined based on the moving speed factor fed back by the UE and the common value or the average value of the gap period.

Based on the related art, after the GNSS position information becomes outdated, a IoT NTN device will leave the connected state. In the embodiments of the present application, a start point of a negotiated gap is before the GNSS position information becomes outdated, and it is ensured that the GNSS position information may be successfully re-acquired before the GNSS position information becomes outdated. If the UE is unable to acquire a valid gap in time, the UE may directly use a default gap to re-acquire GNSS position.

In an embodiment, if before the GNSS position information becomes outdated, the terminal shares a consistent understanding that the terminal will not leave the connected state with the network device. For example, based on the terminal's request and/or the configuration of the network device, the terminal and the network device determine that when the terminal's GNSS position information becomes outdated, the terminal will not leave the connected state, then the start point of the gap may also be when the GNSS position information becomes outdated, that is, at the time when the GNSS position information becomes outdated.

In an embodiment, the first time information includes one or more of the following:
a time point at which a position of the terminal becomes outdated; or
a time point at which a terminal position validity timer expires.

In an embodiment, the terminal requests to maintain a connected state when the position becomes outdated.

Specifically, the terminal in the embodiments of the present application may not request to acquire the gap, or no longer define the gap.

Based on the related art (IoT NTN standard of Rel-17), after the GNSS position information becomes outdated, a IoT NTN device will leave the connected state. In fact, it also stops data transmission. Therefore, after the GNSS position information becomes outdated, it is not too late for the UE to re-acquire the GNSS position information.

In order to prevent the terminal from entering the non-connected state after the GNSS position information becomes outdated, it is necessary for the UE to share a consistent understanding with the network device: after the GNSS position information becomes outdated, the UE should not leave the connected state but to maintain a connected state and re-acquire the GNSS position information; and after the UE successfully acquires the GNSS position information, it is necessary to inform the network device, and the network device restarts data scheduling.

In the embodiments of the present application, the terminal requests to maintain a connected state in case that the GNSS position information becomes outdated, which ensures that the UE share a consistent understanding with the network device, that is, after the GNSS position information becomes outdated, the UE still maintains the connected state. The necessity of the UE request lies in that the network device may not learn whether the UE needs to perform data communication in the future, whether to directly leave the connected state or to maintain a connected state. In an embodiment, the network device may also determine, based on its own configuration, that the terminal does not leave the connected state after the terminal GNSS position information becomes outdated.

In an embodiment, the network device configures that the UE does not leave the connected state (maintains the connected state) after the GNSS position information becomes outdated. That is, the network device informs the terminal device of the above information (i.e., the terminal does not leave the connected state after the terminal GNSS position information becomes outdated).

After the GNSS position information becomes outdated, if the UE maintains the connected state, the UE performs an operation of GNSS position re-acquisition.

In an embodiment, the terminal requests a dedicated random access resource.

The terminal receives a third message, and the third message includes the dedicated random access resource.

The terminal initiates random access using the dedicated random access resource.

Specifically, in the embodiment of the present application, the dedicated random access resource may be extended, for example, it may be a dedicated scheduling request (SR) resource, a dedicated sounding reference signal (SRS) resource, etc.

In the embodiment of the present application, a dedicated random access resource is used to inform the network device that the terminal has completed the acquisition of the position. The acquisition of the position may be the acquisition of GNSS position, the acquisition of GPS position, the GNSS measurement, etc.

Specifically, before the UE re-acquires the GNSS position, the UE may or may not inform the network device. The UE informs the network device, for example, through a special physical layer signaling, a medium access control (MAC) control element (CE), etc. Even if the UE informs that the UE will acquire the GNSS position, it does not need to wait for feedback or acknowledgement from the network device.

In an embodiment, after the UE successfully acquires the GNSS position, it may inform the network device that it has successfully acquired the GNSS position, such as through an SRS signal, or a radon access channel (RACH) procedure, etc. (a dedicated random access preamble, or a dedicated preamble transmitted on a dedicated random access channel occasion (RO)). After the UE successfully acquires the GNSS position, the method for informing the network device that it has successfully acquired the GNSS position may include that: the terminal initiates a random access procedure on a dedicated random access resource, for example, transmitting a dedicated random access preamble indicated by the dedicated random access resource on a dedicated random access channel occasion indicated by the dedicated random access resource; or, transmitting an SR request on a dedicated SR resource; or, transmitting an SRS signal on the dedicated SRS resource.

In an embodiment, a preamble indicated by a dedicated random access resource is transmitted on an RO indicated by the dedicated random access resource. The RO is a time-frequency resource for preamble transmission.

For example, after the GNSS position information becomes outdated, if the UE maintains the connected state, the UE performs an operation of re-acquiring the GNSS position.

After the UE successfully acquires the GNSS position, it informs the network device that it has successfully acquired the GNSS position.

Before the GNSS position validity timer expires, the UE may request the network device to configure a dedicated random access resource (for example, a physical random access channel (PRACH) resource). Alternatively, the network device directly configures a dedicated random access resource for the UE.

After successfully acquiring the GNSS position, the UE informs the network device through the dedicated PRACH resource. The network device may continue to schedule. The method of the UE request may be to define a MAC CE.

In an embodiment, dedicated physical uplink shared channel (PUSCH) resources or physical uplink control channel (PUCCH) resources may be configured. For example, a dedicated SRS resource may be defined. After the UE completes the GNSS position acquisition, the network device is informed by transmitting the SRS signal on the dedicated SRS resource. The following description takes the dedicated PRACH resource as an example, and the expression is also suitable for other dedicated resources.

In an embodiment, acquiring, by the terminal, a dedicated random access resource configured by a network device includes:
a start time and/or an available duration of an available period of time for the terminal to acquire the dedicated random access resource, or a start time and/or an end time of an available period of time for the terminal to acquire the dedicated random access resource.

In an embodiment, the terminal receives a fourth message, where the fourth message includes a start time and/or an available duration of an available period of time for the dedicated random access resource, or a start time and/or an end time of an available period of time for the dedicated random access resource.

For example, if the network device configures a dedicated PRACH resource, time t1 may be defined. t1 may be a specific moment or a relative duration.

t1 indicates a validity duration of the dedicated PRACH resource. Because after the network device configures the dedicated PRACH resource, the UE must at least complete GNSS position re-acquisition before using the PRACH resource. Therefore, a time may be estimated, for example, when the UE may re-acquire the GNSS position, or a duration may be estimated, how long it will take for the UE to successfully acquire the GNSS position. Then, the PRACH resource will be valid. Before this, the network device may use the above resources for other data transmission, such as allocating them to other UEs that need dedicated PRACH resources. t1 may take into account a duration between a time for PRACH configuration and a time at which the GNSS position becomes outdated, as well as a duration (an empirical value or a maximum/minimum duration) required for the UE to acquire the GNSS position.

In an embodiment, acquiring, by the terminal, a dedicated random access resource configured by a network device includes:
acquiring, by the terminal, a start time and/or an end time of an available period of time for the dedicated random access resource.

For example, if the network device configures a dedicated PRACH resource, time t2 may be defined. t2 may be a specific moment or a relative duration.

t2 is optionally configured. For example, the network device or UE may assume that after the UE uses the dedicated PRACH resource, the dedicated PRACH resource becomes outdated for the UE (the dedicated PRACH resource is no longer a dedicated resource for the UE).

However, considering exception handling, for example, if the UE fails to successfully acquire the GNSS position for a long time, the network device cannot reserve this PRACH resource indefinitely. Therefore, t2 may be defined, and after t2, the dedicated PRACH resource configuration becomes outdated.

How long in advance does the UE re-acquire the GNSS position information before the GNSS position information becomes outdated is left to the UE to implement. The UE may determine by itself based on its current GNSS channel status and duration for acquiring the possible GNSS position. It is also possible to preconfigure an empirical value or for the network device to configure a value.

In the method for position acquisition provided by embodiments of the present application, the terminal acquires first time information and acquires the position information of the terminal based on the first time information, which may ensure that the terminal is in a connected state for a relatively long period of time. The terminal is avoided to enter a non-connected state in case that the GNSS position validity timer expires, and then reconnect to continue data transmission, which improves data transmission efficiency.

The method in the above embodiment is further described in conjunction with several specific examples below.

Example 1: a traditional procedure of negotiating a gap for re-acquisition of GNSS position is reused.
1. UE determines that GNSS position re-acquisition is required.

The criteria for UE to determine GNSS position re-acquisition may be left to the UE to implement. For example, if the UE determines that the current GNSS position information is about to be outdated, the UE may determine that the GNSS position needs to be re-acquired.

After acquiring the GNSS position information, the UE will judge or determine a validity duration of an acquired GNSS position information, and report a remaining validity duration of the GNSS position information to the network device. In this way, the UE and the network device will maintain a GNSS position validity timer, such that the UE may share a consistent understanding of a time point at which the GNSS position information becomes outdated with the network device. Logically speaking, after re-acquiring the GNSS position, the UE may start the corresponding timer, or start the timer after reporting the re-acquisition to the network device. It is available as long as the UE shares a consistent understanding of a moment at which the GNSS position information becomes outdated with the network device.

2. The UE transmits a request of negotiating a gap for GNSS position re-acquisition to the network device.

This step is optional. That is, the UE may perform GNSS position re-acquisition on its own without negotiating the gap with the network device.

The UE may transmit a physical layer signaling (such as special SRS signals, dedicated preambles, etc.), MAC CE or radio resource control (RRC) signaling to notify the network device that the UE is about to re-acquire the GNSS, or negotiate the gap for GNSS position re-acquisition with the network device.

The time when the UE transmits the above signaling may be determined based on the UE, or a time T may be defined. The above signaling must be transmitted at T time before the GNSS position information is about to be outdated to negotiate a gap for GNSS position re-acquisition, or inform the network device that the UE is about to re-acquire the GNSS position (at the time T).

If the UE only notifies the network device that it is about to re-acquire the GNSS position, the UE may use physical layer signaling or MAC CE to carry no or little assistance information.

If the signaling is RRC signaling, the current InterFreqRSTDMeasurementIndication message and related procedures may be used to carry assistance information for reference by the network device.

3. The network device may receive the UE's request of negotiating a gap for GNSS re-acquisition or UE's GNSS position re-acquisition indication.

The request of negotiating or GNSS position re-acquisition indication may be physical layer signaling (such as a special SRS signal, a dedicated preamble, etc.), MAC CE or RRC signaling transmitted from the UE, so as to determine that the UE is about to re-acquire the GNSS position, or wants to negotiate the gap for GNSS position re-acquisition with the network device.

In an embodiment, a time T3 may be defined. After receiving the UE's request or indication information, the network device must transmit a response message to the UE within the time T3. The response information includes configuration information or a successful reception indication, etc.

If it is only the GNSS position re-acquisition indication information, the indication information may be physical layer signaling or MAC CE, carrying no or little assistance information.

If it is to negotiate a gap for the GNSS position re-acquisition, it may be RRC signaling, carrying assistance information for reference by the network device. The current InterFreqRSTDMeasurementIndication message and related procedures may be used.

In the InterFreqRSTDMeasurementIndication message, it is indicated that the message is used to negotiate a gap for GNSS position re-acquisition, and the network device configures a gap for the GNSS position re-acquisition to the UE. In an embodiment, the gap may be one-off or periodic. Whether the gap is one-off or periodic, the network device may determine by itself, or based on the tendency indicated by the UE. For example, if a GNSSPeriod field appears, it is considered that the UE wants to configure a periodic gap, otherwise, the UE wants to configure a one-off gap.

If InterFreqRSTDMeasurementIndication carries GNSSGapRequest instead of interFreqRSTDMeasurementIndication-r10, the network device believes that the UE is requesting to negotiate the GNSS position and then acquire the gap, rather than requesting a positioning-associated gap.

If InterFreqRSTDMeasurementIndication carries the GNSSGap field, the network device configures a gap for GNSS position re-acquisition for the UE based on this field, mainly the length of the gap, a start point, etc. If this field is not carried, the network device may configure no gap, or configure an empirical value or an average value.

4. The network device configures a gap for GNSS re-acquisition.

This step is optional. That is, the network device may configure no GNSS re-acquisition gap.

5. The terminal receives the configuration information or feedback of the network device.

This step is optional. That is, the UE may directly perform GNSS position re-acquisition without waiting for the feedback of the network device, or within a certain time T1, if no feedback from the network device is received within T1 (a time threshold may be defined to avoid the UE waiting indefinitely). Alternatively, a threshold T2 is defined, and the GNSS position must be re-acquired at T2 before the GNSS position information is about to be outdated, regardless of whether the UE receives the configuration information or feedback of the network device or not.

6. The terminal performs GNSS position re-acquisition.

If the UE acquires the configuration information of the network device, the UE performs GNSS position re-acquisition based on the configuration information. For example, the UE acquires a gap configured by the network device, the UE determines a start point, a duration, a period and other information of the gap, and performs GNSS position re-acquisition based on the determined gap.

If the UE does not receive the configuration information of the network device, or the UE does not receive the feedback of the network device, the UE may perform GNSS position re-acquisition based on the pre-configured information. For example, gap configuration is predefined (specified in specification or transmitted through network device broadcast), the UE determines a start point, a duration, a period and other information of the gap based on the predefined gap configuration, and performs GNSS position re-acquisition based on the determined gap.

If a time (start point) of the gap configuration has not arrived, the UE's GNSS position information is about to be outdated, the UE may choose not to wait for the time corresponding to the gap, and acquire the GNSS position by itself, or re-acquire the GNSS position information after the GNSS position information becomes outdated. However, it is necessary to inform the network device that the UE will not leave the connected state after the GNSS position information becomes outdated. Otherwise, based on the current protocol, the network device will think that the UE will leave the connected state after the GNSS position information becomes outdated.

Alternatively, if the UE does not receive the configuration information of the network device, or the UE does not receive the feedback of the network device, the UE may perform GNSS position re-acquisition based on the pre-configured information.

7. During the period when the UE performs GNSS position re-acquisition, the network device maintains the UE in the connected state, but stops data transmission to the UE.

The network device may determine a time for the UE to re-acquire the GNSS position based on a configured gap or an agreed gap.

The network device may receive the indication information of the UE to determine that the UE has completed the GNSS position re-acquisition. The indication information is a special SRS received, or a dedicated preamble monitored, etc.

Example 2: The gap is not clearly defined, and the GNSS position validity timer expires. However, a mechanism is defined and the network device may learn the time information when the UE successfully re-acquires the GNSS position.
1. The UE may transmit a request to a network device to request the network device to configure a dedicated random access resource (as mentioned above, it may also be other dedicated resources, such as a dedicated SR resource, a dedicated SRS resource, a dedicated PUSCH resources, etc. The following description of dedicated PRACH resources is also applicable to other dedicated resources).
2. Before the current GNSS validity timer expires, the network device configures a dedicated PRACH resource.

The network device configures a time t1. After the moment of t1 or after the duration of t1, the dedicated PRACH resource is enabled. The t1 may be the empirical value, a minimum value of the time required for the UE to acquire the GNSS position, plus a duration between a moment for PRACH resource configuration and a moment at which the GNSS position becomes outdated.

The network device configures time t2. After the moment of t2 or after the duration of t2, the dedicated PRACH configuration is no longer available.

3. After the current GNSS position information becomes outdated, the UE performs GNSS position re-acquisition (without leaving the connected state). After re-acquiring the GNSS position, the UE informs the network device through the above-mentioned dedicated PRACH resource that it has completed the GNSS position re-acquisition.

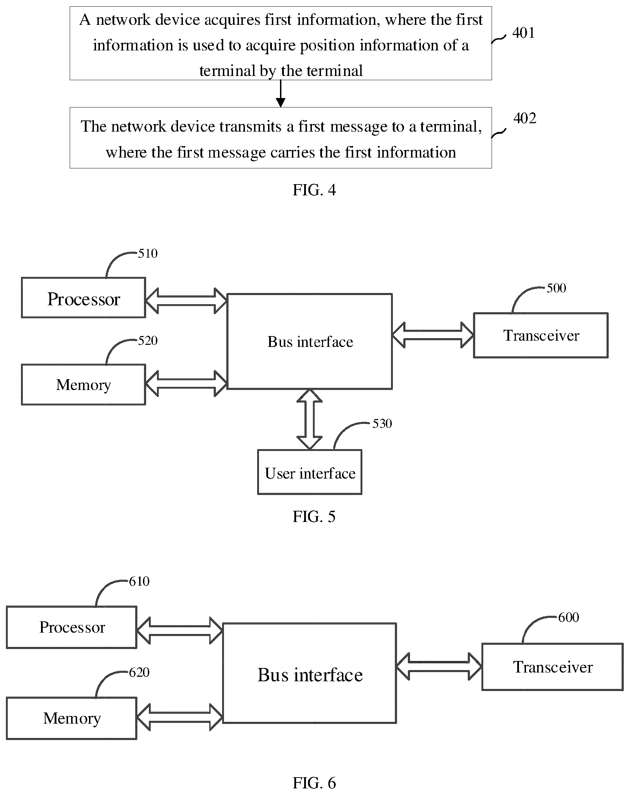

FIG. 4 is a second schematic flowchart of a method for position acquisition according to an embodiment of the present application. As shown in FIG. 4, the method for position acquisition according to an embodiment of the present application may be performed by a network device, such as a base station, etc. The method includes the following steps.

Step 401: a network device acquires first information, where the first information is used to acquire position information of a terminal by the terminal.

Step 402: the network device transmits a first message to a terminal, where the first message carries the first information.

In some embodiments, the first information is first time information, where the first time information is used to acquire the position information of the terminal by the terminal.

In some embodiments, the method further includes:
acquiring, by the network device, a second message transmitted from the terminal, where the second message includes assistance information.

In some embodiments, the method further includes:
determining, by the network device, first time information based on the assistance information.

In some embodiments, the assistance information includes one or more pieces of the following information:
usage indication information of a first message;
a first duration; or
a first period.

In some embodiments, the first time information is dedicated random access resource configuration information.

In some embodiments, the method further includes:
receiving, by the network device, a request message for maintaining connected state.

In some embodiments, the method further includes:
receiving, by the network device, a request message for dedicated random access resource.

In some embodiments, the method further includes:
transmitting, by the network device, a third message, where the third message includes a dedicated random access resource.

In some embodiments, the method further includes:
transmitting, by the network device, a fourth message, where the fourth message includes a start time and/or an available duration of an available period of time for a dedicated random access resource, or a start time and/or an end time of an available period of time for a dedicated random access resource.

In some embodiments, the method further includes:
receiving, by the network device, a random access request message using the dedicated random access resource.

In an embodiment, the method for position acquisition provided by the embodiments of the present application may refer to the above-mentioned embodiment of method for position acquisition performed by the terminal, and may achieve the same effect. The parts and beneficial effects of the method in the present embodiments which are the same as those of the method in the corresponding embodiment will be omitted here.

FIG. 5 is a schematic structural diagram of a terminal according to an embodiment of the present application. As shown in FIG. 5, the terminal includes a memory 520, a transceiver 500, and a processor 510, in which:
the memory 520 is used to store a computer program; the transceiver 500 is used to receive and transmit data under control of the processor 510; the processor 510 is used to read the computer program in the memory 520 and perform the following operations:
acquiring first time information; and
acquiring position information of the terminal based on the first time information.

In an embodiment, the transceiver 500 is used to receive and transmit data under control of the processor 510.

In FIG. 5, a bus architecture may include any number of interconnected buses and bridges. Specifically, the interconnected buses and the bridges are linked together through various circuits of one or more processors represented by processor 510 and memory(memories) represented by the memory 520. The bus architecture may also link together various other circuits, such as peripherals, voltage regulators, and power management circuits, which are well known in the art and thereby will not be further described in the present application. The bus interface provides an interface. The transceiver 500 may be multiple elements, i.e., including a transmitter and a receiver, units for providing communication with various other devices over transmission media including wireless channels, wired channels, fiber optic cables, and the like. For different user equipments, the user interface 530 may also be an interface capable of externally or internally connecting the required equipment, and the connected equipment includes, but not limited to, a keypad, a display, a speaker, a microphone, a joystick, and the like.

The processor 510 is responsible for managing the bus architecture and general processing. The memory 520 may store data used by the processor 510 when performing operations.

In some embodiments, the processor 510 may be a central processing unit (CPU), an application specific integrated circuit (ASIC), a field-programmable gate array (FPGA), or a complex programmable logic device (CPLD). The processor may also use a multi-core architecture.

The processor is configured to perform any one of the methods of the embodiments of the present application based on an obtained executable instruction by calling the computer program stored in the memory. The processor and memory may also be physically separated.

In some embodiments, the processor is used to read the computer program in the memory and perform the following operation:
receiving a first message, where the first message carries the first time information.

In some embodiments, the processor is used to read the computer program in the memory and perform the following operation:
transmitting a second message to a network device, where the second message includes assistance information, and the assistance information is used to assist the network device in determining the first time information.

In some embodiments, the assistance information includes one or more pieces of the following information:
usage indication information of a first message;
a first duration; or
a first period.

In some embodiments, the first time information is predefined time information.

In some embodiments, the first time information is a first period of time;
acquiring the position information of the terminal based on the first time information includes:
acquiring the position of the terminal within the first period of time.

In some embodiments, the first time information includes one or more of the following:
a time point at which a position of the terminal becomes outdated; or
a time point at which a terminal position validity timer expires.

In some embodiments, the processor is further used to read the computer program in the memory and perform the following operation:
requesting to maintain a connected state.

In some embodiments, the processor is further used to read the computer program in the memory and perform the following operation:
requesting a dedicated random access resource.

In some embodiments, the processor is further used to read the computer program in the memory and perform the following operation:
receiving a third message, where the third message includes the dedicated random access resource.

In some embodiments, the processor is further used to read the computer program in the memory and perform the following operation:
initiating random access using the dedicated random access resource.

In some embodiments, acquiring a dedicated random access resource configured by a network device includes:
acquiring a start time and/or an available duration of an available period of time for the dedicated random access resource, or
acquiring a start time and/or an end time of an available period of time for the dedicated random access resource.

In some embodiments, the processor is further used to read the computer program in the memory and perform the following operation:
receiving a fourth message, where the fourth message includes a start time and/or an available duration of an available period of time for the dedicated random access resource, or a start time and/or an end time of an available period of time for the dedicated random access resource.

It should be noted here that the above-mentioned terminal according to the embodiments of the present application may implement all the method steps implemented by the above-mentioned method embodiments performed by the terminal, and may achieve the same effect. The parts and beneficial effects in the present embodiment which are the same as those in the method embodiments will be omitted here.

FIG. 6 is a schematic structural diagram of a network device according to an embodiment of the present application. As shown in FIG. 6, the network device includes a memory 620, a transceiver 600, and a processor 610, in which:
the memory 620 is used to store a computer program; the transceiver 600 is used to transmit and receive data under the control of the processor; and the processor 610 is used to read the computer program in the memory 620 and perform the following operations of:
acquiring first information, where the first information is used to acquire position information of a terminal by the terminal; and
transmitting a first message to a terminal, where the first message carries the first information.

In an embodiment, the transceiver 600 is used to receive and transmit data under control of the processor 610.

In FIG. 6, a bus architecture may include any number of interconnected buses and bridges. Specifically, the interconnected buses and the bridges are linked together through various circuits of one or more processors represented by the processor 610 and memory(memories) represented by the memory 620. The bus architecture may also link together various other circuits, such as peripherals, voltage regulators, and power management circuits, which are well known in the art and thereby will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like. The processor 610 is responsible for managing the bus architecture and general processing. The memory 620 may store data used by the processor 610 when performing operations.

The processor 610 may be a central processing unit (CPU), an application specific integrated circuit (ASIC), a field-programmable gate array (FPGA), or a complex programmable logic device (CPLD). The processor may also use a multi-core architecture.

In some embodiments, the first information is first time information, where the first time information is used to acquire the position information of the terminal by the terminal.

In some embodiments, the processor is further used to read the computer program in the memory and perform the following operation:
acquiring a second message transmitted from the terminal, where the second message includes assistance information.

In some embodiments, the processor is further used to read the computer program in the memory and perform the following operation:
determining first time information based on the assistance information.

In some embodiments, the assistance information includes one or more pieces of the following information:
usage indication information of a first message;
a first duration; or
a first period.

In some embodiments, the first time information is dedicated random access resource configuration information.

In some embodiments, the processor is further used to read the computer program in the memory and perform the following operation:
receiving a request message for maintaining connected state.

In some embodiments, the processor is further used to read the computer program in the memory and perform the following operation:
receiving a request message for dedicated random access resource.

In some embodiments, the processor is further used to read the computer program in the memory and perform the following operation:
transmitting a third message, where the third message includes a dedicated random access resource.

In some embodiments, the processor is further used to read the computer program in the memory and perform the following operation:
transmitting a fourth message, where the fourth message includes a start time and/or an available duration of an available period of time for a dedicated random access resource, or a start time and/or an end time of an available period of time for a dedicated random access resource.

In some embodiments, the processor is further used to read the computer program in the memory and perform the following operation:
receiving a random access request message using the dedicated random access resource.

In an embodiment, the above-mentioned network device according to the embodiments of the present application may implement all the method steps implemented by the above-mentioned method embodiments performed by the network device, and may achieve the same effect. The parts and beneficial effects in the present application which are the same as those in the method embodiments will be omitted here.

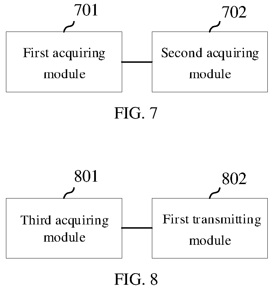

FIG. 7 is a first schematic structural diagram of an apparatus for position acquisition according to an embodiment of the present application. As shown in FIG. 7, the apparatus for position acquisition according to an embodiment of the present application includes a first acquiring module 701 and a second acquiring module 702.

The first acquiring module 701 is used to acquire first time information; and the second acquiring module 702 is used to acquire position information of the terminal based on the first time information.

In some embodiments, the apparatus further includes a first receiving module;
where the first receiving module is used to receive a first message, the first message carries the first time information.

In some embodiments, the apparatus further includes a second transmitting module;
where the second transmitting module is used to transmit a second message to a network device, the second message includes assistance information, and the assistance information is used to assist the network device in determining the first time information.

In some embodiments, the assistance information includes one or more pieces of the following information:
usage indication information of a first message;
a first duration; or
a first period.

In some embodiments, the first time information is predefined time information.

In some embodiments, the first time information is a first period of time;
acquiring the position information of the terminal based on the first time information includes:
acquiring the position of the terminal within the first period of time.

In some embodiments, the first time information includes one or more of the following:
a time point at which a position of the terminal becomes outdated; or
a time point at which a terminal position validity timer expires.

In some embodiments, the apparatus further includes a first requesting module;
where the first requesting module is used to request to maintain a connected state.

In some embodiments, the apparatus further includes a second requesting module;
where the second requesting module is used to request a dedicated random access resource.

In some embodiments, the apparatus further includes a second receiving module;
where the second receiving module is used to receive a third message, and the third message includes the dedicated random access resource.

In some embodiments, the apparatus further includes a first initiating module;
where the first initiating module is used to initiate random access using the dedicated random access resource.

In some embodiments, acquiring a dedicated random access resource configured by a network device includes:
acquiring a start time and/or an available duration of an available period of time for the dedicated random access resource, or
acquiring a start time and/or an end time of an available period of time for the dedicated random access resource.

In some embodiments, the apparatus further includes a third receiving module;
where the third receiving module is used to receive a fourth message, and the fourth message includes a start time and/or an available duration of an available period of time for the dedicated random access resource, or a start time and/or an end time of an available period of time for the dedicated random access resource.

In an embodiment, the above-mentioned apparatus for position acquisition according to the embodiments of the present application may implement all the method steps implemented by the above-mentioned method embodiments performed by the terminal, and may achieve the same effect. The parts and beneficial effects in the present application which are the same as those in the method embodiments will be omitted here.

FIG. 8 is a second schematic structural diagram of an apparatus for position acquisition according to an embodiment of the present application. As shown in FIG. 8, the apparatus for position acquisition according to an embodiment of the present application includes a third acquiring module 801 and a first transmitting module 802.

The third acquiring module 801 is used to acquire first information, where the first information is used to acquire position information of a terminal by the terminal; and the first transmitting module 802 is used to transmit a first message to a terminal, where the first message carries the first information.

In some embodiments, the first information is first time information, where the first time information is used to acquire the position information of the terminal by the terminal.

In some embodiments, the apparatus further includes a fourth acquiring module;
where the fourth acquiring module is used to acquire a second message transmitted from the terminal, and the second message includes assistance information.

In some embodiments, the apparatus further includes a first determining module;
where the first determining module is used to determine first time information based on the assistance information.

In some embodiments, the assistance information includes one or more pieces of the following information:
usage indication information of a first message;
a first duration; or
a first period.

In some embodiments, the first time information is dedicated random access resource configuration information.

In some embodiments, the apparatus further includes a fourth receiving module;
where the fourth receiving module is used to receive a request message for maintaining connected state.

In some embodiments, the apparatus further includes a fifth receiving module;
where the fifth receiving module is used to receive a request message for dedicated random access resource.

In some embodiments, the apparatus further includes a third transmitting module;
where the third transmitting module is used to transmit a third message, and the third message includes a dedicated random access resource.

In some embodiments, the apparatus further includes a fourth transmitting module;
where the fourth transmitting module is used to transmit a fourth message, and the fourth message includes a start time and/or an available duration of an available period of time for a dedicated random access resource, or a start time and/or an end time of an available period of time for a dedicated random access resource.

In some embodiments, the apparatus further includes a sixth receiving module;
where the sixth receiving module is used to receive a random access request message using the dedicated random access resource.

In an embodiment, the above-mentioned apparatus for position acquisition according to the embodiments of the present application may implement all the method steps implemented by the above-mentioned method embodiments performed by the network device, and may achieve the same effect. The parts and beneficial effects in the present embodiments which are the same as those in the method embodiments will be omitted here.

It should be noted that, the division of units/modules in the embodiments of the present application is schematic, and is only a logical function division, and there may be other division manners in actual implementation. In addition, functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

Some embodiments of the present application further provide a computer-readable storage medium storing a computer program, where the computer program causes a computer to perform the method for position acquisition as described in the respective method embodiments above.

Specifically, the above-mentioned computer-readable storage medium according to the embodiments of the present application can implement all the method steps implemented by the above-mentioned method embodiments, and may achieve the same effect. The parts and beneficial effects in the present embodiments which are the same as those in the method embodiments will not be repeated here.

It should be noted that the computer-readable storage medium may be any available medium or data storage device that can be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

It should be noted that terms "first", "second," etc. are used to distinguish similar objects and are not used to describe a particular order or sequence. It is to be understood that the used terms are interchangeable under appropriate circumstances so that embodiments of the present application can be practiced in sequences other than those illustrated or described herein, and that the terms "first" and "second" are distinguished objects which usually belong to one type, and the number of objects is not limited. For example, the first object can be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "alternative" relationship.

In the embodiments of the present application, the term "multiple" refers to two or more, and other quantifiers are similar.

The solutions according to the embodiments of the present application may be applicable to various systems, especially a 5G system. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be called as a user equipment (UE). A wireless terminal device may communicate with one or more core networks (CN) via a radio access network (RAN), and the wireless terminal may be a mobile terminal, such as a mobile phone (or "cellular "phone) and computers with mobile terminal device, e.g., a portable mobile device, a pocket-sized mobile device, a hand-held mobile device, a computer-built mobile device or a vehicle-mounted mobile device, which exchange language and/or data with the radio access network, for example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an Internet protocol (IP) communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

"Determining B based on A" in the present application means that the factor A should be considered when B is determined. It is not limited to "determining B based on A alone", but also includes "determining B based on A and C", "determining B based on A, C and E", "determining C based on A, and further determining B based on C", etc. In addition, it may also include using A as a condition for determining B, for example, "when A satisfies a first condition, determining B using the first method", for another example, "when A satisfies a second condition, determining B", etc.; for still another example, "when A satisfies a third condition, determining B based on the first parameter" and so on. It may also be that A is used as a condition for determining B factor, for example, "when A satisfies the first condition, determining C using the first method, and further determining B based on C" and so on.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by the person skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media including computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to generate a machine such that the instructions executed by the processor of the computer or other programmable data processing device generate a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, such that the instructions stored in the processor-readable memory generate a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process, such that instructions performed on the computer or other programmable devices provide steps for performing the functions specified in one or more flows of the flowchart and/or one or more blocks of the block diagram.

It will be apparent to the person skilled in the art that various modifications and variations may be made in the present application without departing from the scope of the present application. As such, provided that these modifications and variations of the present application fall within the scope of the claims and their equivalents of the present application, the present application is also intended to cover such modifications and variations.

## Claims

1. A method for position acquisition, comprising:
acquiring, by a terminal, first time information; and
acquiring, by the terminal, position information of the terminal based on the first time information.

2. The method of claim 1, further comprising:
receiving, by the terminal, a first message, wherein the first message carries the first time information.

3. The method of claim 1 or 2, further comprising:
transmitting, by the terminal, a second message to a network device, wherein the second message comprises assistance information, and the assistance information is used to assist the network device in determining the first time information.

4. The method of claim 3, wherein the assistance information comprises one or more pieces of the following information:
usage indication information of a first message;
a first duration; or
a first period.

5. The method of claim 1, wherein the first time information is predefined time information.

6. The method of claim 1, wherein the first time information is a first period of time;
acquiring, by the terminal, the position information of the terminal based on the first time information comprises:
acquiring, by the terminal, a position of the terminal within the first period of time.

7. The method of claim 1, wherein the first time information comprises one or more of the following:
a time point at which a position of the terminal becomes outdated; or
a time point at which a terminal position validity timer expires.

8. The method of claim 7, further comprising:
requesting, by the terminal, to maintain a connected state.

9. The method of claim 7 or 8, further comprising:
requesting, by the terminal, a dedicated random access resource.

10. The method of claim 9, further comprising:
receiving, by the terminal, a third message, wherein the third message comprises the dedicated random access resource.

11. The method of claim 10, further comprising:
initiating, by the terminal, random access using the dedicated random access resource.

12. The method of claim 10, wherein acquiring, by the terminal, a dedicated random access resource configured by a network device comprises:
acquiring, by the terminal, a start time and/or an available duration of an available period of time for the dedicated random access resource, or
acquiring, by the terminal, a start time and/or an end time of an available period of time for the dedicated random access resource.

13. The method of claim 10 or 12, further comprising:
receiving, by the terminal, a fourth message, wherein the fourth message comprises a start time and/or an available duration of an available period of time for the dedicated random access resource, or a start time and/or an end time of an available period of time for the dedicated random access resource.

14. A method for position acquisition, comprising:
acquiring, by a network device, first information, wherein the first information is used to acquire position information of a terminal by the terminal; and
transmitting, by the network device, a first message to the terminal, wherein the first message carries the first information.

15. The method of claim 14, wherein the first information is first time information, wherein the first time information is used to acquire the position information of the terminal by the terminal.

16. The method of claim 14 or 15, further comprising:
acquiring, by the network device, a second message transmitted from the terminal, wherein the second message comprises assistance information.

17. The method of claim 16, further comprising:
determining, by the network device, first time information based on the assistance information.

18. The method of claim 16, wherein the assistance information comprises one or more pieces of the following information:
usage indication information of a first message;
a first duration; or
a first period.

19. The method of claim 15, wherein the first time information is dedicated random access resource configuration information.

20. The method of claim 19, further comprising:
receiving, by the network device, a request message for maintaining connected state.

21. The method of claim 19 or 20, further comprising:
receiving, by the network device, a request message for dedicated random access resource.

22. The method of claim 21, further comprising:
transmitting, by the network device, a third message, wherein the third message comprises a dedicated random access resource.

23. The method of claim 21, further comprising:
transmitting, by the network device, a fourth message, wherein the fourth message comprises a start time and/or an available duration of an available period of time for a dedicated random access resource, or a start time and/or an end time of an available period of time for a dedicated random access resource.

24. The method of claim 22 or 23, further comprising:
receiving, by the network device, a random access request message using the dedicated random access resource.

25. A terminal, comprising a memory, a transceiver and a processor,
the memory is used to store a computer program; the transceiver is used to receive and transmit data under control of the processor; the processor is used to read the computer program in the memory and perform the following operations:
acquiring first time information; and
acquiring position information of the terminal based on the first time information.

26. The terminal of claim 25, wherein the processor is further used to read the computer program in the memory and perform the following operation:
receiving a first message, wherein the first message carries the first time information.

27. The terminal of claim 25 or 26, wherein the processor is further used to read the computer program in the memory and perform the following operation:
transmitting a second message to a network device, wherein the second message comprises assistance information, and the assistance information is used to assist the network device in determining the first time information.

28. The terminal of claim 27, wherein the assistance information comprises one or more pieces of the following information:
usage indication information of a first message;
a first duration; or
a first period.

29. The terminal of claim 25, wherein the first time information is predefined time information.

30. The terminal of claim 25, wherein the first time information is a first period of time;
acquiring the position information of the terminal based on the first time information comprises:
acquiring the position of the terminal within the first period of time.

31. The terminal of claim 25, wherein the first time information comprises one or more of the following:
a time point at which a position of the terminal becomes outdated; or
a time point at which a terminal position validity timer expires.

32. The terminal of claim 31, wherein the processor is further used to read the computer program in the memory and perform the following operation:
requesting to maintain a connected state.

33. The terminal of claim 31 or 32, wherein the processor is further used to read the computer program in the memory and perform the following operation:
requesting a dedicated random access resource.

34. The terminal of claim 33, wherein the processor is further used to read the computer program in the memory and perform the following operation:
receiving a third message, wherein the third message comprises the dedicated random access resource.

35. The terminal of claim 34, wherein the processor is further used to read the computer program in the memory and perform the following operation:
initiating random access using the dedicated random access resource.

36. The terminal of claim 34, wherein acquiring a dedicated random access resource configured by a network device comprises:
acquiring a start time and/or an available duration of an available period of time for the dedicated random access resource, or
acquiring, a start time and/or an end time of an available period of time for the dedicated random access resource.

37. The terminal of claim 34 or 36, wherein the processor is further used to read the computer program in the memory and perform the following operation:
receiving a fourth message, wherein the fourth message comprises a start time and/or an available duration of an available period of time for the dedicated random access resource, or a start time and/or an end time of an available period of time for the dedicated random access resource.

38. A network device, comprising a memory, a transceiver and a processor,
the memory is used to store a computer program; the transceiver is used to receive and transmit data under control of the processor; the processor is used to read the computer program in the memory and perform the following operations:
acquiring first information, wherein the first information is used to acquire position information of a terminal by the terminal; and
transmitting a first message to a terminal, wherein the first message carries the first information.

39. The network device of claim 38, wherein the first information is first time information, wherein the first time information is used to acquire the position information of the terminal by the terminal.

40. The network device of claim 38 or 39, wherein the processor is further used to read the computer program in the memory and perform the following operation:
acquiring a second message transmitted from the terminal, wherein the second message comprises assistance information.

41. The network device of claim 40, wherein the processor is further used to read the computer program in the memory and perform the following operations:
determining first time information based on the assistance information.

42. The network device of claim 40, wherein the assistance information comprises one or more pieces of the following information:
usage indication information of a first message;
a first duration; or
a first period.

43. The network device of claim 39, wherein the first time information is dedicated random access resource configuration information.

44. The network device of claim 43, wherein the processor is further used to read the computer program in the memory and perform the following operations:
receiving a request message for maintaining connected state.

45. The network device of claim 43 or 44, wherein the processor is further used to read the computer program in the memory and perform the following operation:
receiving a request message for dedicated random access resource.

46. The network device of claim 45, wherein the processor is further used to read the computer program in the memory and perform the following operations:
transmitting a third message, wherein the third message comprises a dedicated random access resource.

47. The network device of claim 45, wherein the processor is further used to read the computer program in the memory and perform the following operations:
transmitting a fourth message, wherein the fourth message comprises a start time and/or an available duration of an available period of time for a dedicated random access resource, or a start time and/or an end time of an available period of time for a dedicated random access resource.

48. The network device of claim 46 or 47, wherein the processor is further used to read the computer program in the memory and perform the following operation:
receiving a random access request message using the dedicated random access resource.

49. An apparatus for position acquisition, comprising:
a first acquiring module, used to acquire first time information; and
a first acquiring module, used to acquire position information of a terminal based on the first time information.

50. The apparatus of claim 49, further comprising a first receiving module;
wherein the first receiving module is used to receive a first message, wherein the first message carries the first time information.

51. The apparatus of claim 49 or 50, further comprising a second transmitting module;
wherein the second transmitting module is used to transmit a second message to a network device, the second message comprises assistance information, and the assistance information is used to assist the network device in determining the first time information.

52. The apparatus of claim 51, wherein the assistance information comprises one or more pieces of the following information:
usage indication information of a first message;
a first duration; or
a first period.

53. The apparatus of claim 49, wherein the first time information is predefined time information.

54. The apparatus of claim 49, wherein the first time information is a first period of time;
acquiring the position information of the terminal based on the first time information comprises:
acquiring the position of the terminal within the first period of time.

55. The apparatus of claim 49, wherein the first time information comprises one or more of the following:
a time point at which a position of the terminal becomes outdated; or
a time point at which a terminal position validity timer expires.

56. The apparatus of claim 55, further comprising a first requesting module;
wherein the first requesting module is used to request to maintain a connected state.

57. The apparatus of claim 55 or 56, further comprising a second requesting module;
wherein the second requesting module is used to request a dedicated random access resource.

58. The apparatus of claim 57, further comprising a second receiving module:
wherein the second receiving module is used to receive a third message, and the third message comprises the dedicated random access resource.

59. The apparatus of claim 58, further comprising a first initiating module;
wherein the first initiating module is used to initiate random access using the dedicated random access resource.

60. The apparatus of claim 58, wherein acquiring a dedicated random access resource configured by a network device comprises:
acquiring a start time and/or an available duration of an available period of time for the dedicated random access resource, or
acquiring a start time and/or an end time of an available period of time for the dedicated random access resource.

61. The apparatus of claim 58 or 60, further comprising a third receiving module;
wherein the third receiving module is used to receive a fourth message, and the fourth message comprises a start time and/or an available duration of an available period of time for the dedicated random access resource, or a start time and/or an end time of an available period of time for the dedicated random access resource.

62. An apparatus for position acquisition, comprising:
a third acquiring module, used to acquire first information, wherein the first information is used to acquire position information of a terminal by the terminal; and
a first transmitting module, used to transmit a first message to a terminal, wherein the first message carries the first information.

63. The apparatus of claim 62, wherein the first information is first time information, wherein the first time information is used to acquire the position information of the terminal by the terminal.

64. The apparatus of claim 62 or 63, further comprising a fourth acquiring module;
wherein the fourth acquiring module is used to acquire a second message transmitted from the terminal, and the second message comprises assistance information.

65. The apparatus of claim 64, further comprising a first determining module;
wherein the first determining module is used to determine first time information based on the assistance information.

66. The apparatus of claim 64, wherein the assistance information comprises one or more pieces of the following information:
usage indication information of a first message;
a first duration; or
a first period.

67. The apparatus of claim 63, wherein the first time information is dedicated random access resource configuration information.

68. The apparatus of claim 67, further comprising a fourth receiving module;
wherein the fourth receiving module is used to receive a request message for maintaining connected state.

69. The apparatus of claim 67 or 68, further comprising a fifth receiving module;
wherein the fifth receiving module is used to receiving a request message for dedicated random access resource.

70. The apparatus of claim 69, further comprising a third transmitting module;
wherein the third transmitting module is used to transmit a third message, and the third message comprises a dedicated random access resource.

71. The apparatus of claim 69, further comprising a fourth transmitting module;
wherein the fourth transmitting module is used to transmit a fourth message, and the fourth message comprises a start time and/or an available duration of an available period of time for a dedicated random access resource, or a start time and/or an end time of an available period of time for a dedicated random access resource.

72. The apparatus of claim 70 or 71, further comprising a sixth receiving module;
wherein the sixth receiving module is used to receive a random access request message using the dedicated random access resource.

73. A computer-readable storage medium, wherein the computer-readable storage medium stores a computer program, and the computer program causes a computer to perform the method of any one of claims 1 to 24.
